# EUROPÄISCHE PATENTANMELDUNG

(11) **EP 2 070 663 A1**
(43) Veröffentlichungstag der Anmeldung: **17.06.2009**
(21) Anmeldenummer: 07024288.8
(22) Anmeldetag: 14.12.2007
(51) Int. Cl.: B25J 9/04

(54) **Montageanordnung**

(71) Anmelder: SIEMENS AKTIENGESELLSCHAFT, 80333 München (DE)
(72) Erfinder: Drogan, Thorsten, 13435 Berlin (DE); Niederbremer, Fabian, 12487 Berlin (DE)

(57) **Zusammenfassung**

Es wird eine Montageanordnung zum Montieren eines Brenners (13) für Gasturbinen und/oder eines am Brenner (13) zu montierenden oder montierten heißgasführenden Elementen zur Verfügung gestellt. Die Montageanordnung weist wenigstens eine Montagevorrichtung auf, welche umfasst:
- wenigstens ein Tragelement (14),
- einen am Tragelement (14) angeordneten Greifausleger (5, 6),
- eine am Greifausleger (5, 6) angeordnete Halterung (33) und
- ein an der Halterung (33) angeordnetes Befestigungselement (35), das zum Befestigen des Brenners (13) oder des heißgasführenden Elementes an der Halterung (33) ausgestaltet ist. Die Anordnung aus Tragelement (14), Greifausleger (5, 6), Halterung (33) und Befestigungselement (35) stellt drei translatorische Freiheitsgrade und wenigstens zwei Freiheitsgrade der Orientierung für einen am Befestigungselement befestigten Brenner (13) bzw. ein am Befestigungselement befestigtes heißgasführenden Element zur Verfügung stellt.

## Beschreibung

Die vorliegende Erfindung betrifft eine Montageanordnung zum Montieren eines Brenners für Gasturbinen und/oder eines am Brenner zu montierenden oder montierten heißgasführenden Elementes.

Brennersysteme für Gasturbinen haben ein sehr großes Gewicht, welches bei der Montage von den Mitarbeitern gehandhabt werden muss. Deshalb werden die Komponenten in der Regel als Einzelteile geliefert und auf der Baustelle montiert, was die Montagezeit erhöht. Besonders schwer sind vormontierte Brenner. In diesen sind an einem Brennerträger bereits ein sog. Basket - eine weitgehend zylindrisches Brennraumgehäuse - und eine Hülse, das sog. Flow Sleeve, befestigt. Zwischen der Außenseite des Baskets und der Innenseite des Flow Sleevs ist dabei ein Luftzufuhrkanal für die Luftzufuhr zu den Brennerdüsen gebildet ist. Der vormontierte Brenner wird bei der Montage in ein Übergangsstück (Transition Piece) eingeschoben, welches den mehr oder weniger kreisförmigen Querschnitt des Baskets in einen Querschnitt überführt, der einem Kreisringsegment entspricht. Bei derartigen vormontierten Brennern kann das Gewicht der Einheit mehrere hundert Kilogramm betragen. Vor allem bei so schweren Komponenten ist die Handhabung schwierig. Hierbei ist insbesondere auch zu berücksichtigen, dass die Brenner auch von schräg unten in dafür vorgesehene Aufnahmeöffnungen eines Gehäuseflansches montiert werden müssen.

Aufgabe der vorliegenden Erfindung ist es daher, eine Montageanordnung zum Montieren eines Brenners für Gasturbinen und/oder eines heißgasführenden Elementes zur Verfügung zu stellen, welche die Montage vereinfacht.

Diese Aufgabe wird durch eine Montageanordnung nach Anspruch 1 gelöst. Die abhängigen Ansprüche enthalten vorteilhafte Ausgestaltungen der Montageanordnung.

Eine erfindungsgemäße Montageanordnung zum Montieren eines Brenners für Gasturbinen und/oder eines heißgasführenden Elementes, bspw. ein Transition Piece, weist wenigstens eine Montagevorrichtung auf. Die Montagevorrichtung umfasst wenigstens ein Tragelement, bspw. eine Säule, einen am Tragelement angeordneten Greifausleger, eine am Greifausleger angeordnete Halterung und ein an der Halterung angeordnetes Befestigungselement. Das Befestigungselement ist zum Befestigen des Brenners oder des heißgasführenden Elementes an der Halterung ausgestaltet. Dabei kann entweder der Brennerträger alleine am Befestigungselement befestigt werden oder ein vollständiger Brenner, d.h. mit bereits am Brennerträger angeordnetem Basket. Alternativ kann das heißgasführende Element am Befestigungselement befestigt werden. In der erfindungsgemäßen Montageanordnung stellt die Anordnung aus Tragelement, Greifausleger, Halterung und Befestigungselement drei translatorische Freiheitsgrade in einem definierten Raumbereich und wenigstens zwei Freiheitsgrade der räumlichen Orientierung für einen am Befestigungselement befestigten Brenner bzw. ein am Befestigungselement angeordnetes heißgasführendes Element zur Verfügung.

Die erfindungsgemäße Montageanordnung ermöglicht das Positionieren eines am Gehäuseflansch zu befestigenden Brenners bzw. eines heißgasführenden Elementes relativ zum Gehäuseflansch. Gehäuseflansche können bspw. zylindersymmetrisch sein und eine sich um die Symmetrieachse herum ersteckende und zu dieser geneigte Fläche mit Einbauöffnungen zum Durchführen der heißgasführenden Elemente und zum Einführen der Brenner aufweisen. Die Öffnungen weisen daher eine Vielzahl von Orientierungen auf, was eine hohe Flexibilität beim Positionieren des Brenners bzw. des heißgasführenden Elementes erfordert. Mit der erfindungsgemäßen Montageanordnung lässt sich ein Brenner bzw. ein heißgasführendes Element, welches an der Befestigungsvorrichtung befestigt ist, hinreichend genau relativ zur Orientierung der jeweiligen Einbauöffnung positionieren und orientieren. Das Positionieren und Orientieren durch Montagearbeiter von Hand ist somit nicht zwingend notwendig. Die Montageanordnung ermöglicht es daher dem Montagepersonal, die Brenner schnell und für Mensch und Bauteil gefahrlos zu montieren. Da die Montagevorrichtung zudem zum Halten sehr schwerer Bauteile ausgebildet sein kann, ist es insbesondere auch möglich, bereits vormontierte Brenner in die Öffnungen des Gehäuseflansches einzuführen und zu montieren.

In einer Ausgestaltung der erfindungsgemäßen Montageanordnung ist der Greifausleger relativ zum Tragelement verschiebbar und relativ zum Tragelement um eine erste Schwenkachse sowie um eine zweite Schwenkachse verschwenkbar angeordnet. Die zweite Schwenkachse verläuft dabei zur ersten Schwenkachse nicht parallel. Außerdem ist der Greifausleger als Knickarm ausgestaltet, der einen ersten und einen zweiten Arm aufweist. Der erste Arm ist am Tragelement befestigt, der zweite Arm am ersten Arm. Weiterhin ist der zweiten Arm um eine dritte Schwenkachse gegenüber dem ersten Arm verschwenkbar am ersten Arm befestigt. Die Halterung ist in dieser Ausgestaltung relativ zum Greifausleger um eine vierte Schwenkachse verschwenkbar am Greifausleger angeordnet. Schließlich ist das Befestigungselement relativ zur Halterung um eine fünfte Schwenkachse verschwenkbar an dieser angeordnet. Die fünfte Schwenkachse verläuft nicht parallel zur vierten Schwenkachse.

In der beschriebenen Ausgestaltung sind die drei translatorischen Freiheitsgrade durch die Verschiebbarkeit des Greifauslegers relativ zum Tragelement, die Verschwenkbarkeit des Greifauslegers um die zweite Schwenkachse sowie die Verschwenkbarkeit des Greifauslegers um die erste Schwenkachse in Verbindung mit der Verschwenkbarkeit des zweiten Arms relativ zum ersten Arm um die dritte Schwenkachse realisiert. Die zwei Freiheitsgrade der räumlichen Orientierung werden durch Schwenken um die vierte und fünfte Schwenkachse realisiert.

Insbesondere ist es hierbei vorteilhaft, wenn der erste Arm des Knickarms in Form eines Parallelgestänges realisiert ist. Dies ermöglicht es, den zweiten Arm des Greifauslegers bei Verschwenkung des Greifauslegers um die zweite Schwenkachse in seiner räumlichen Orientierung konstant zu halten, bspw. immer in der Waagerechten.

Verlaufen zudem die erste Schwenkachse und die dritte Schwenkachse parallel zueinander, so ist es möglich, einen am Befestigungselement befestigten Brenner bzw. ein am Befestigungselement befestigtes heißgasführendes Element translatorisch durch ein Verschwenken um die erste Schwenkachse zu positionieren, ohne dabei seine Orientierung zu verändern. Eine Orientierungsänderung des Brenners bzw. des heißgasführenden Elementes bei einem Schwenk um die erste Schwenkachse wird dabei durch einen ausgleichenden Schwenk um die dritte Schwenkachse ausgeglichen.

Das Parallelgestänge und die Parallelität der ersten und dritten Schwenkachsen zueinander ermöglicht es, das am Befestigungselement befestigte Teil durch die Öffnungen im Gehäuseflansch alleine durch eine translatorische Bewegung hindurchzuführen, nachdem eine geeignete Orientierung eingestellt worden ist. Es sind dann lediglich noch drei der fünf Freiheitsgrade zu steuern, was den Steueraufwand gegenüber gleichzeitigem Steuern von fünf Freiheitsgraden erheblich reduziert.

Es ist außerdem vorteilhaft, wenn die Richtung, in welcher der Greifausleger verschiebbar ist, und die erste Schwenkachse parallel zueinander verlaufen und wenn die zweite Schwenkachse senkrecht zur ersten Schwenkachse verläuft. Dadurch, dass die beiden Schwenkachsen senkrecht zueinander verlaufen und die erste Schwenkachse parallel zur Richtung der Verschiebbarkeit des Greifauslegers verläuft, lässt sich die Translation mit minimaler notwendiger Bewegung der einzelnen Elemente realisieren.

In einer weiteren Ausgestaltung der Montageanordnung verläuft die fünfte Schwenkachse senkrecht zur vierten Schwenkachse. Diese Ausgestaltung ermöglicht es, die Orientierung eines am Befestigungselement befestigten Brenners bzw. eines am Befestigungselement befestigten heißgasführenden Elementes in den zwei Freiheitsgraden der Orientierung mit einem Minimum an notwendiger Bewegung durchzuführen.

Die Verschiebbarkeit des Greifauslegers relativ zum Tragelement kann dadurch erreicht werden, dass der Greifausleger einen Schlitten umfasst, der verfahrbar an dem Tragelement, bspw. an einer Säule, angeordnet ist. Die Verfahrbarkeit des Schlittens kann bspw. durch ein Zahnradgetriebe oder einen Linearmotor realisiert sein. Alternativ ist es auch möglich, das Tragelement als Säulenlift mit einer verfahrbaren Plattform auszugestalten. In diesem Fall weist der Greifausleger einen an der Plattform befestigten Grundkörper auf, mit dem er an der Plattform befestigt ist. Ein Säulenlift kann für sehr hohe Lasten ausgelegt werden.

In der erfindungsgemäßen Montageanordnung kann das an der Halterung angeordnete Befestigungselement bspw. einen Flansch oder Klemmbacken aufweisen. Im Falle eines Flansches kann dieser bspw. an einen Flansch eines Brenners angeflanscht werden, um den Brenner sicher zu halten. Falls das zu haltende Element keinen Flansch aufweist, kann das Befestigungselement mit Klemmbacken zur Anwendung kommen. Bspw. die heißgasführenden Elemente weisen an der zu haltenden Seite in der Regel keinen geeigneten Flansch auf. Mittels der Klemmbacken können diese dann per Klemmsitz vom Befestigungselement gehalten werden. Die Klemmbacken können entweder eine radial nach Außen wirkende Klemmkraft oder eine radial nach Innen wirkende Klemmkraft bereitstellen. Eine radial nach Außen wirkende Klemmkraft ermöglicht hierbei eine kompakte Bauweise des Befestigungselementes.

Es ist außerdem vorteilhaft, wenn die Halterung einen Befestigungsmechanismus zum lösbaren Befestigen des Befestigungselementes an der Halterung aufweist. In diesem Fall kann das Befestigungselement an der Halterung leicht ausgewechselt werden, so dass je nach Bedarf ein geeignetes Befestigungselement Verwendung finden kann.

In einer besonders vorteilhaften Ausgestaltung der erfindungsgemäßen Montageanordnung weist diese zwei Montagevorrichtungen auf. Diese Ausgestaltung ermöglicht es, auch Brenner bzw. heißgasführende Elemente in einen Gehäuseflansch einzuführen, ohne dass die Montageanordnung hierzu verfahren werden muss. Die beiden Montagevorrichtungen der Montageanordnung können dann mit Abstand voneinander so angeordnet sein, dass ein Gehäuseflansch zwischen ihnen platziert werden kann. In diesem Fall kann jede Montagevorrichtung zum Montieren von Brennern bzw. heißgasführenden Elementen in die auf ihrer Seite gelegenen Öffnungen verwendet werden. Dadurch kann die Montagegeschwindigkeit erhöht werden. Gleichzeitig kann die Montagevorrichtung konstruktiv einfacher gehalten werden, da diese nicht verfahrbar ausgestaltet werden muss. Zudem würde eine Vielzahl von Montageorten die Verwendung einer verfahrbaren Montagvorrichtung nicht zulassen. Insgesamt werden durch das Vorhandensein von zwei Montagevorrichtungen in einer Montageanordnung die Einsatzmöglichkeiten der Anordnung erhöht.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
- Figur 1: zeigt eine erfindungsgemäße Montageanordnung zusammen mit einem Brennergehäuse für Gasturbinenbrenner in einer perspektivischen Darstellung.
- Figur 2: zeigt einen Säulenlift der Montageanordnung aus Figur 1.
- Figur 3: zeigt einen hydraulischen Greifausleger der Montageanordnung in einer Seitenansicht.
- Figur 4: zeigt den maximalen Arbeitsradius des Greifauslegers aus Figur 3 in einer Aufsicht.
- Figur 5: zeigt die Halterung des hydraulischen Greifauslegers in einer Seitenansicht, wobei unterschiedliche Schwenkstellungen eines an der Halterung befestigten Brenners dargestellt sind.
- Figur 6: zeigt die Halterung aus Figur 5 in einer perspektivischen Darstellung zusammen mit einem an der Halterung befestigten Brenner.
- Figur 7: zeigt einen pneumatischen Greifausleger der Montageanordnung in einer Seitenansicht.
- Figur 8: zeigt die Halterung des pneumatischen Greifauslegers in einer Seitenansicht.
- Figur 9: zeigt das Befestigungselement der Halterung aus Figur 7 in einer Frontalansicht.
- Figur 10: zeigt die Halterung aus Figur 8 zusammen mit einem daran befestigten Transition Piece in einer perspektivischen Darstellung.

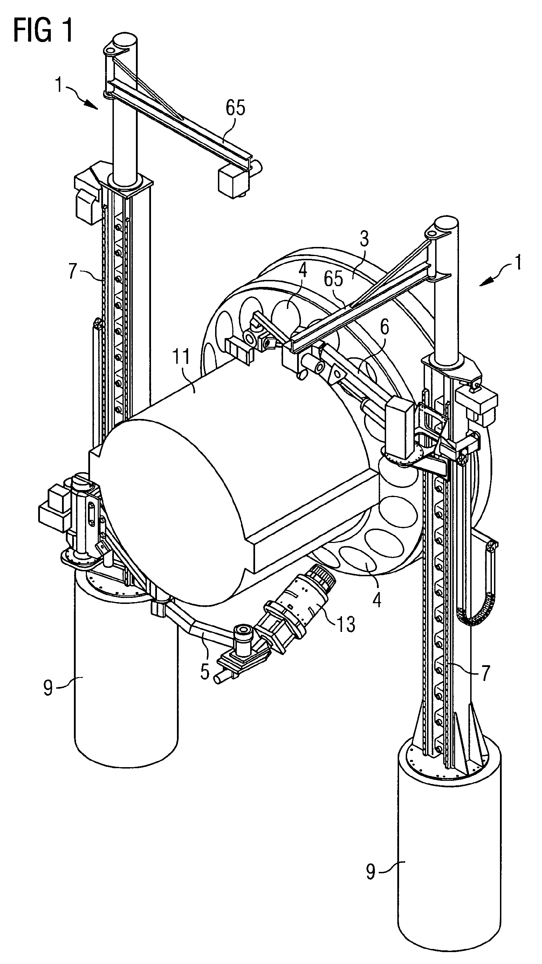

Nachfolgend wird anhand der Figuren 1 bis 9 ein Ausführungsbeispiel für die erfindungsgemäße Montageanordnung dargestellt. Hierbei zeigt Figur 1 die erfindungsgemäße Montageanordnung in einer perspektivischen Ansicht. Ebenfalls dargestellt ist in dieser Figur ein Brennergehäuse 3 mit Einbauöffnungen 4 aufweisenden Gehäuseflansch, in die Brennerträger mittels der Montageanordnung eingeschoben werden. Es besteht aber auch die Möglichkeit, wie in Figur 1 dargestellt Brenner 13 in die Öffnungen 4 einzuschieben, bei denen bereits Basket und Flow Sleeve am Brennerträger befestigt sind.

Die Montageanordnung umfasst zwei Montagevorrichtungen 1, welche jeweils einen Säulenlift 7 und einen am Säulenlift 7 schwenkbeweglich angeordneten Greifausleger 5, 6 umfassen. Im vorliegenden Ausführungsbeispiel sind zwei verschiedene Greifausleger 5, 6 vorhanden, nämlich ein hydraulischer Greifausleger 5, der insbesondere zum Greifen schwerer Lasten wie die vormontierten Brenner 13 ausgelegt ist, und ein pneumatischer Greifausleger 6, der nur für leichtere Lasten wie bspw. Transition Pieces ausgelegt ist. Aufgrund der gegenüber dem hydraulischen Greifausleger 5 geringeren Baumasse des pneumatischen Greifauslegers 6 und der damit verbundenen geringeren Massenträgheit erlaubt der pneumatische Greifausleger 6 auch ein manuelles Bewegen der Last, was dem Montagepersonal ein direktes und feinfühliges Positionieren der Last ermöglicht.

Durch die Verwendung von zwei Montagevorrichtungen je Montageanordnung kann außerdem erreicht werden, dass alle Öffnungen 4 des Brennergehäuses 3 trotz des Hindernisses, dass ein vom zentralen Bereich des Brennergehäuses 3 ausgehendes Rotorgehäuse 11 bildet, jede Öffnung 4 von wenigstens einer Montagevorrichtung erreicht werden kann. Das Verfahren einer Montagevorrichtung ist daher nicht nötig. Beim Montieren können dann bspw. auf der einen Seite des Brennergehäuses 3 mit Hilfe des pneumatischen Greifauslegers 6 die Transition Pieces montiert werden. Danach wird der pneumatische Greifausleger 6 in der zweiten Montagevorrichtung 1 verwendet, um die restlichen Transition Pieces zu montieren. Gleichzeitig kann der hydraulische Greifausleger 5 in der ersten Montagevorrichtung 1 dazu verwendet werden, die vormontierten Brenner zu montieren.

Die Säulenlifte 7 der Montagevorrichtungen 1 ruhen im vorliegenden Ausführungsbeispiel auf Betonfundamenten 9. Alternativ zur in Figur 1 dargestellten Anordnung der Montagevorrichtungen 1 und insbesondere der Säulenlifte 7, besteht auch die Möglichkeit die Säulenlifte 7 statt auf Fundamenten 9 ruhend von der Decke hängend anzuordnen. Als weitere Alternative besteht auch die Möglichkeit, die Tragsäule 14 des Säulenliftes 7 statt auf einem festen Fundament auf einer verfahrbaren Plattform oder an einem verfahrbaren Deckenkran zu befestigen. In diesen Fällen wäre nur eine Montagevorrichtung notwendig, um alle Brenner 13 zu montieren.

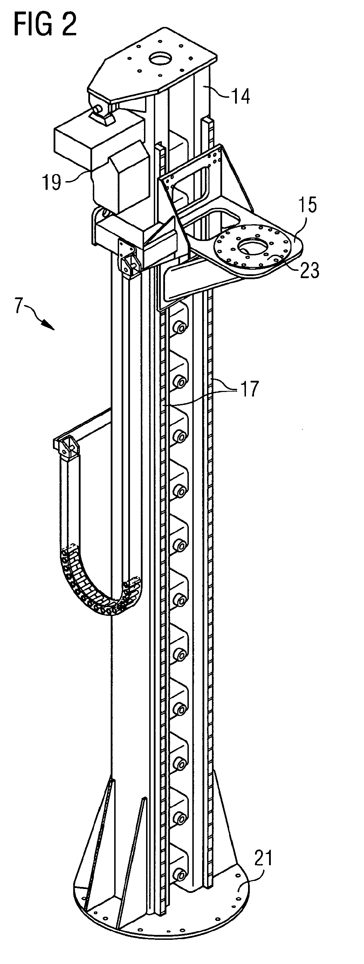

Der Säulenlift 7 ist in Figur 2 perspektivisch dargestellt. Er umfasst eine Tragsäule 14 mit daran angeordneten Führungsschienen 17 zum Führen einer Plattform 15, die mittels eines Antriebes entlang der Schienen 17 in der Höhe verfahrbar ist. Die Unterseite der Tragsäule 14 ist durch einen Flansch gebildet, mit dem sie mit einem Fundament 9 verschraubt werden kann. Die Plattform 15 weist ebenfalls einen Flansch 23 auf, an den der Grundkörper 25 eines Greifauslegers 5 angeflanscht werden kann. Die weiteren in Figur 1 dargestellten Greifausleger 65 dienen zum Zusammensetzen der jeweiligen Montagevorrichtung 1, insbesondere zum Halten der Greifausleger 5, während diese an der Plattform 15 der Tragsäule 14 befestigt werden.

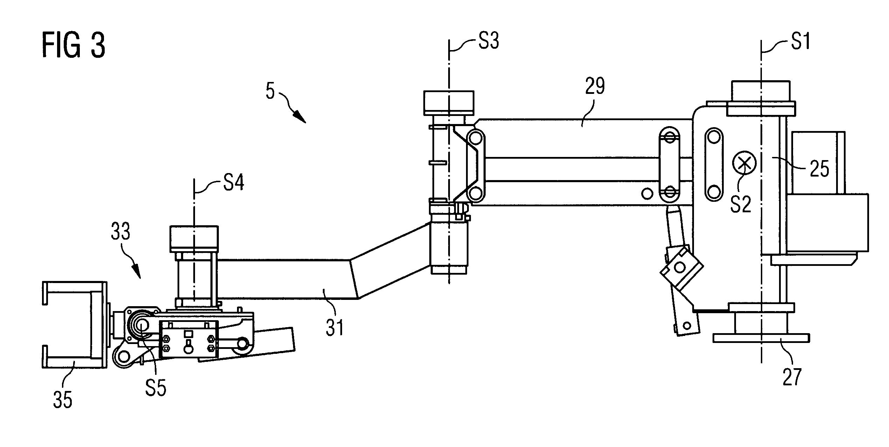

Ein hydraulischer Greifausleger 5 ist in Figur 3 in Seitenansicht detailliert dargestellt. Es sind der hydraulische Grundkörper 25 mit einem Flansch 27, mit dessen Hilfe der Grundkörper an den Flansch 23 der Plattform 15 des Säulenliftes 7 angeflanscht werden kann, ein erster Arm 29 und ein zweiter Arm 31 zu erkennen. Am äußeren Ende des zweiten Armes 31 ist außerdem eine Halterung 33 schwenkbeweglich befestigt, die mit einem Befestigungselement 35 ausgestattet ist.

Der erste Arm 29 ist als Hubarm in Form eines Parallelgestänges ausgebildet und ist mit dem Grundkörper 25 schwenkbeweglich um die Schwenkachse S1 an der Plattform 15 des Säulenliftes 7 gelagert. An dem von hydraulischen Grundkörper 25 entfernten Ende des Hubarms 29 ist der zweite Arm um eine Schwenkachse S3 schwenkbeweglich am Hubarm 29 befestigt. Der zweite Arm bildet einen Schwenkarm des Greifauslegers 5.

Die Halterung 33 ist wiederum schwenkbeweglich an dem vom Hubarm 29 entfernten Ende des Schwenkarms 31 gelagert. Die Schwenkachse, um die die Halterung 33 geschwenkt werden kann ist in Figur 3 als Schwenkachse S4 eingezeichnet. Die Halterung 33 weist zudem eine weitere Schwenkachse S5 auf, um die das Befestigungselement 35 verschwenkt werden kann.

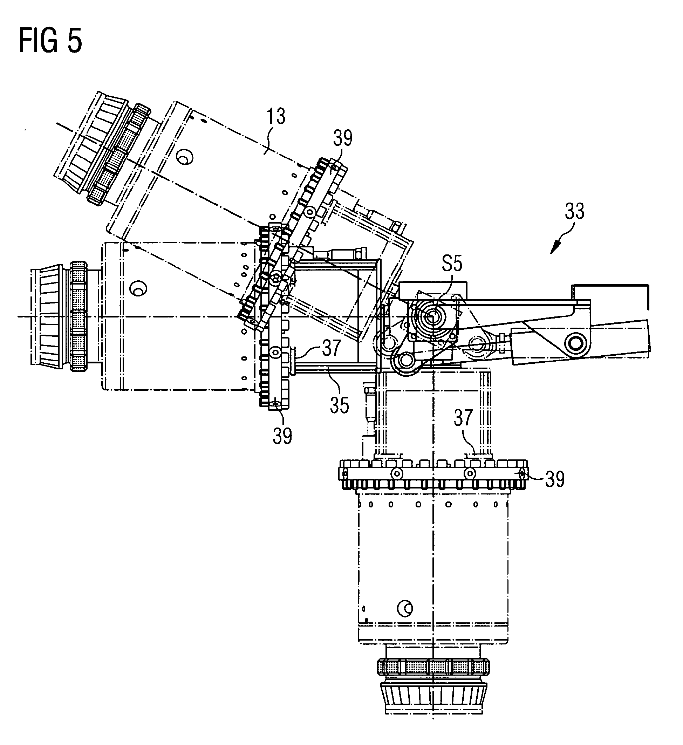

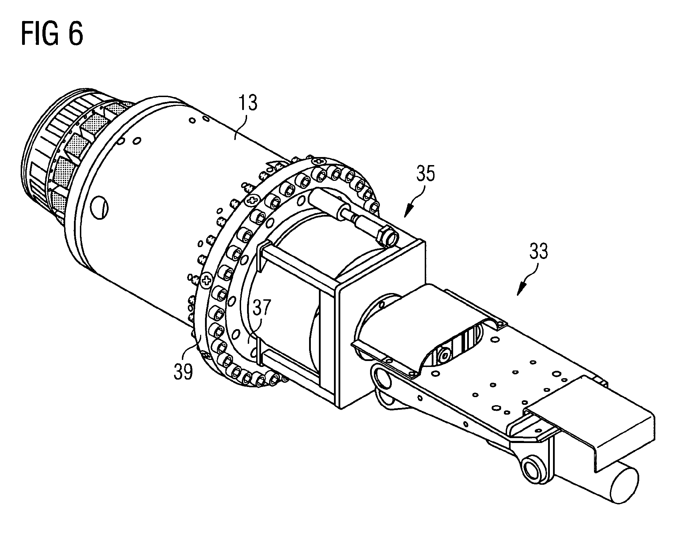

Die Halterung 33, das Befestigungselement 35 sowie die Schwenkmöglichkeit des Befestigungselementes 35 um die Schwenkachse S5 sind in Figur 5 im Detail dargestellt. Figur 5 zeigt außerdem einen am Befestigungselement 35 befestigten Brenner 13. Die Halterung 33, das Befestigungselement 35 und ein am Befestigungselement 35 befestigte Brenner 13 sind außerdem in Figur 6 perspektivisch dargestellt.

Zum Befestigen des Brenners 13 weist das Befestigungselement 35 einen Flansch 37 auf, an den der Brenner 13 angeflanscht werden kann. Das Anflanschen an den Flansch 37 erfolgt jedoch nicht mittels des eigentlichen Brennerflansches 39, da dieser zum Befestigen des Brenners 13 am Brennergehäuse 3 vorgesehen ist.

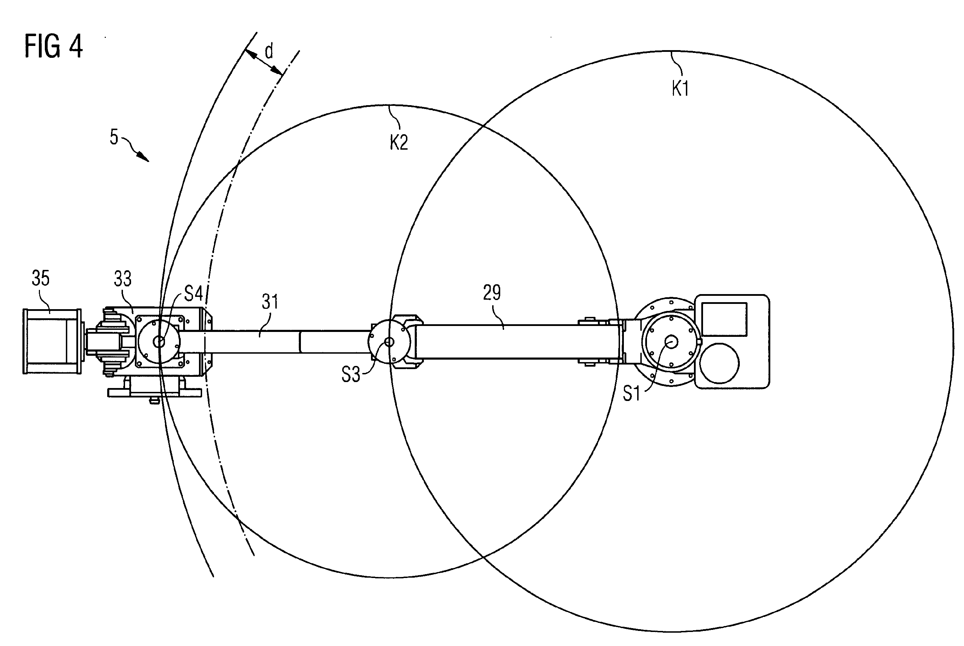

Der Greifausleger stellt drei Bewegungsfreiheitsgrade zur Verfügung. So kann der Hubarm 29 um eine horizontale Schwenkachse S2 verschwenkt werden, um die Hubbewegung zu realisieren. Gleichzeitig kann der Hubarm um die vertikale Schwenkachse S1 verschwenkt und entlang der Tragsäule 7 verfahren werden. Durch Kombinieren der beiden Schwenkbewegungen kann das vom Grundkörper 25 entfernten Endes des Hubarmes 29 eine Bewegung ausführen, die auf einer Kugelfläche legt. Da der Hubarm 29 zudem mittels des Säulenliftes 7 vertikal verfahrbar ist, lässt sich die vertikale Lage der erreichbaren Kugelfläche mittels des Säulenliftes variieren. Die Ausgestaltung des Hubarms 29 als Parallelgestänge gewährleistet hierbei, dass bei einem Heben oder Senken des Hubarmes 29 die Orientierung der Schwenkachse S3 im Raum unverändert bleibt. Auf diese Weise verläuft der Schwenkarm 31 in dem Bereich, an dem die Halterung 33 befestigt ist, immer waagrecht. Ein horizontaler Schnitt K1 durch die vom Hubarm 29 erreichbare Kugelfläche ist in Figur 4 gezeigt, die eine Aufsicht auf einen völlig ausgestreckten Greifausleger 5 zeigt.

Durch Verschwenken des Schwenkarmes 31 um die Schwenkachse S3 kann zudem das vom Hubarm 29 entfernte Ende des Schwenkarmes 31 auf einen Kreis K2 um die Schwenkachse S3 herum bewegt werden. Der Bewegungskreis des Schwenkarmes ist in Figur 4 ebenfalls dargestellt. Ein verschwenken des Greifauslegers 5 um die Schwenkachse S1 alleine würde für eine Veränderung der Orientierung des Befestigungselementes 35 im Raum führen. Diese Veränderung kann jedoch durch eine Schwenkbewegung um die Schwenkachse S3 und ggf. um die Schwenkachse S4 ausgeglichen werden, so dass die Orientierung des Befestigungselementes 35 im Raum beibehalten werden kann.

Durch die Kombination der Schwenkbewegungen um die Schwenkachsen S1 und S3 kombiniert mit der Hubbewegung kann eine dreidimensionale Positionierung der Befestigungsvorrichtung 35 und damit eines an der Befestigungsvorrichtung 35 befestigten Brenners realisiert werden. Die Ausgestaltung des Hubarms 29 als Parallelgestänge und die Parallelität der Schwenkachsen S1 und S3 ermöglichen es hierbei, die Orientierung des Halteelementes 35, und damit auch des Brenners 13, während des Positionierens konstant zu halten. Dies erleichtert das Einschieben eines Brenners in die Öffnungen 4 des Brennergehäuses 3, da eine einmal für den Einbau eingestellte Orientierung des Brenners 13 beim Einbau beibehalten werden kann.

Das Orientieren des Befestigungselementes kann durch eine Drehung der Halterung um die Schwenkachse S4 in Verbindung mit einer Drehung des Befestigungselementes 35 um die Schwenkachse S5 erfolgen. Dadurch werden zwei Freiheitsgrade der Orientierung realisiert. Falls noch ein dritter Freiheitsgrad der Orientierung realisiert werden soll, kann die Halterung 33 oder das Befestigungselement 35 zudem um eine weitere Achse drehbar ausgestaltet sein, wobei diese weitere Achse sowohl die Schwenkachse S4 als auch die Schwenkachse S5 vorzugsweise Senkrecht schneidet. Dieser dritte Freiheitsgrad der Orientierung ist aber nicht unbedingt notwendig, wenn die Öffnungen des Brennergehäuses in ihrer Orientierung nur in zwei Freiheitsgraden variieren, bspw. aufgrund ihrer Anordnung in einer Konusfläche.

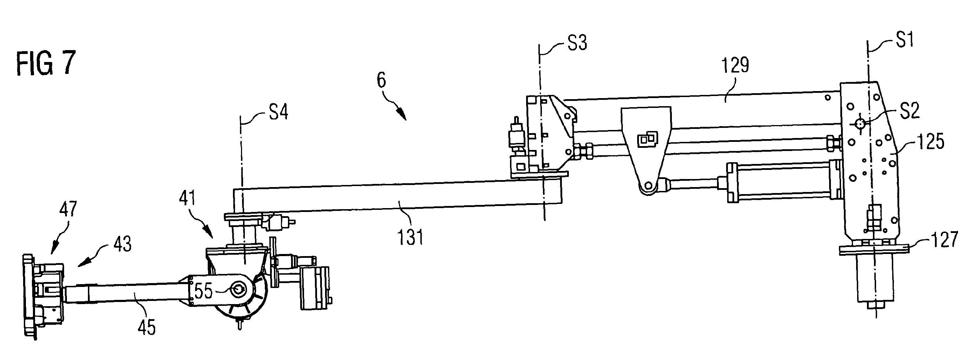

Ein pneumatischer Greifausleger 6 ist in Figur 7 in Seitenansicht detailliert dargestellt. Es sind der pneumatische Grundkörper 125 mit einem Flansch 27, mit dessen Hilfe der Grundkörper an den Flansch 23 der Plattform 15 des Säulenliftes 7 angeflanscht werden kann, ein erster Arm 129 und ein zweiter Arm 131 zu erkennen. Am äußeren Ende des zweiten Armes 31 ist außerdem eine Halterung 41 schwenkbeweglich befestigt, die mit einem Befestigungselement 43 ausgestattet ist.

Der erste Arm 129 ist als Hubarm in Form eines Parallelgestänges ausgebildet und ist mit dem Grundkörper 125 schwenkbeweglich um die Schwenkachse S1 an der Plattform 15 des Säulenliftes 7 gelagert. An dem von pneumatischen Grundkörper 125 entfernten Ende des Hubarms 129 ist der zweite Arm um eine Schwenkachse S3 schwenkbeweglich am Hubarm 129 befestigt. Der zweite Arm bildet einen Schwenkarm des Greifauslegers 6.

Die Halterung 41 ist wiederum schwenkbeweglich an dem vom Hubarm 129 entfernten Ende des Schwenkarms 131 gelagert. Die Schwenkachse, um die die Halterung 41 geschwenkt werden kann ist in Figur 7 als Schwenkachse S4 eingezeichnet. Die Halterung 41 weist zudem eine weitere Schwenkachse S5 auf, um die das Befestigungselement 43 verschwenkt werden kann.

Der pneumatische Greifausleger 6 ist im vorliegenden Ausführungsbeispiel im Vergleich zum hydraulischen Greifausleger 5 für geringere Lasten ausgelegt. Er benötigt daher eine entsprechend geringere Tragfähigkeit, was es ermöglicht, ihn weniger Massiv als den hydraulischen Greifausleger 5 auszugestalten. Dadurch bietet sich auch die Möglichkeit, den pneumatischen Greifausleger 6 so auszuführen, dass er von Hand in seiner Lage verändert werden kann.

Die Bewegungsmöglichkeiten des pneumatischen Greifauslegers 6 entsprechen denen mit Bezug auf Figur 4 beschriebenen Bewegungsmöglichkeiten des hydraulischen Greifauslegers 5 und werden daher nicht noch einmal erläutert.

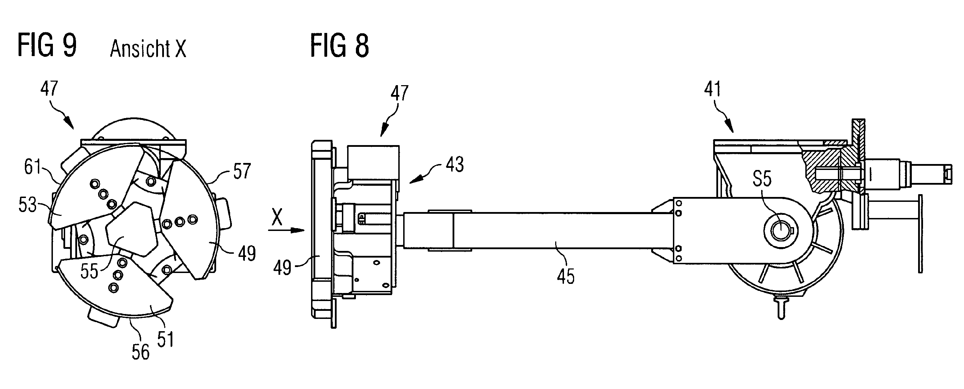

Die Halterung 41 und das Befestigungselement 43 sind in den Figuren 8 und 9 dargestellt. Während Figur 8 eine Seitenansicht der Halterung 41 mit dem daran befestigten Befestigungselement 43 zeigt, zeigt Figur 9 eine Frontalansicht auf das Befestigungselement 43 in der Richtung, die in Figur 8 durch den Pfeil X angedeutet ist.

Das Befestigungselement 43 umfasst im Wesentlichen einen Arm 45, der um die Schwenkachse S5 schwenkbeweglich an der Halterung 41 befestigt ist. Die Halterung 41 kann wiederum wie die Halterung 33 am vom Hubarm 129 entfernten Ende des Schwenkarms 131 des pneumatischen Greifauslegers 6 befestigt werden.

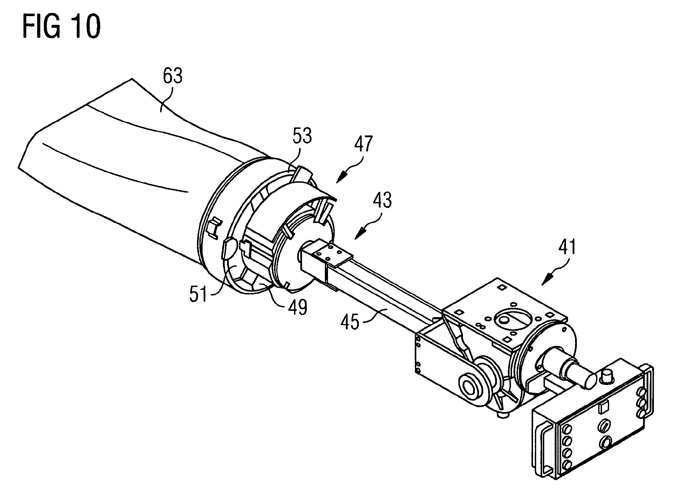

Am von der Halterung 41 entfernten Ende des Arms 45 ist eine Klemmbackenvorrichtung 47 angeordnet. Diese Klemmbackenvorrichtung 47 umfasst drei Klemmbacken 49, 51, 53, die am besten in Figur 9 zu erkennen sind. Die Klemmbacken sind in radialer Richtung verschiebbar an einem Klemmbachenantrieb 55 gelagert. Durch Verschieben der Klemmbacken 49, 51, 53 mittels des Klemmbackenantriebs 55 können Klemmflächen an der Innenseite eines zylindrischen Elementes mit einer vorgegebenen Klemmkraft zur Anlage gebracht werden, so dass das zylindrische Element gehalten wird. Das zylindrische Element kann hierbei bspw. ein zylindrischer Teil eines Übergangsstückes 63 (Transition Piece) sein, wie dies in Figur 10 dargestellt ist. Ein von der Halterung 41 mit den Befestigungselement 43 gehaltenes Transition Piece 63 ist in Figur 10 in perspektivischer Ansicht dargestellt.

Das Einbauen von Brenner und Transition Piece durch die Öffnungen 4 des Brennergehäuses 3 hindurch mittels der erfindungsgemäßen Montageanordnung ermöglicht es dem Montagepersonal, die Brenneranordnung schnell und gefahrlos für Mensch und Bauteil zu montieren. Selbstverständlich ist es auch möglich, den Brenner nur zusammen mit dem Brennraumelement in das Brennergehäuse 3 einzusetzen und das Transition Piece separat zu montieren.

Die Befestigung der Halterungen 33, 41 an den Greifauslegern 5, 6 ist in der erfindungsgemäßen Montageanordnung vorzugsweise einfach lösbar ausgestaltet, um ein rasches Austauschen der Halterung gegen eine alternative Halterung zu ermöglichen. Außerdem kann die mit Bezug auf den pneumatischen Greifausleger 6 beschriebene Halterung 41 auch an dem hydraulischen Greifausleger 5 befestigt werden. Ebenso ist es auch möglich, die mit Bezug auf den hydraulischen Greifausleger 5 beschriebene Halterung 33 an dem pneumatischen Greifausleger 6 zu befestigen, bspw. um nur den relativ leichten Brennerträger statt eines schweren vollständig vorkonfigurierten Brenners zu montieren. Außer den beiden beschriebenen Halterungen mit den unterschiedlichen Befestigungselementen können auch weitere Halterungen mit alternativen Ausgestaltungen von Befestigungselementen zur Anwendung kommen.

## Patentansprüche

1. Montageanordnung
zum Montieren eines Brenners (13) für Gasturbinen und/oder eines am Brenner (13) zu montierenden oder montierten heißgasführenden Elementes (63) mit wenigstens einer Montagevorrichtung (1),
welche umfasst:
- wenigstens ein Tragelement (14),
- einen am Tragelement (14) angeordneten Greifausleger (5, 6),
- eine am Greifausleger (5, 6) angeordnete Halterung (33, 41) und
- ein an der Halterung (33, 41) angeordnetes Befestigungselement (35, 43), das zum Befestigen des Brenners (13) oder des heißgasführenden Elementes (63) an der Halterung (33, 41) ausgestaltet ist,
wobei die Anordnung aus Tragelement (14), Greifausleger (5, 6), Halterung (33, 41) und Befestigungselement (35, 43) drei translatorische Freiheitsgrade und wenigstens zwei Freiheitsgrade der Orientierung für einen am Befestigungselement (35) befestigten Brenner (13) bzw. ein am Befestigungselement (43) befestigtes heißgasführendes Element (63) zur Verfügung stellt.

2. Montageanordnung nach Anspruch 1,
bei der
- der Greifausleger (5, 6) relativ zum Tragelement (14) verschiebbar und relativ zum Tragelement (14) um eine erste Schwenkachse (S1) sowie um eine zweite Schwenkachse (S2) verschwenkbar am Tragelement (14) angeordnet ist, wobei die zweite Schwenkachse (S2) zur ersten Schwenkachse (S1) nicht parallel verläuft,
- der Greifausleger (5, 6) einen Knickarm mit einem ersten Arm (29) und einem zweiten Arm (31) umfasst, wobei der erste Arm (29) am Tragelement (14) befestigt ist und der zweite Arm (31) am ersten Arm (29) um eine dritte Schwenkachse (S3) verschwenkbar befestigt ist,
- die Halterung (33, 41) relativ zum Greifausleger (5, 6) um eine vierte Schwenkachse (S4) verschwenkbar am Greifausleger (5) angeordnet ist und
- das Befestigungselement (35, 43) relativ zur Halterung (33, 41) um eine fünfte Schwenkachse (S5) verschwenkbar an der Halterung (33, 41) angeordnet ist, wobei die fünfte Schwenkachse (S5) zur vierten Schwenkachse (S4) nicht parallel verläuft.

3. Montageanordnung nach Anspruch 2,
bei der der erste Arm (29) des Greifauslegers (5, 6) in Form eine Parallelgestänges realisiert ist.

4. Montageanordnung nach Anspruch 2 oder 3,
bei der die erste Schwenkachse (S1) und die dritte Schwenkachse (S3) parallel zueinander verlaufen.

5. Montageanordnung nach Anspruch 2 oder 4,
bei der die Richtung, in welcher der Greifausleger (5, 6) verschiebbar ist, und die erste Schwenkachse (S1) parallel zueinander verlaufen und bei der die zweite Schwenkachse (S2) senkrecht zur ersten Schwenkachse (S1) verläuft.

6. Montageanordnung nach einem der Ansprüche 2 bis 5,
bei der die fünfte Schwenkachse (S5) senkrecht zur vierten Schwenkachse (S4) verläuft.

7. Montageanordnung nach einem der Ansprüche 2 bis 6,
bei der der Greifausleger (5, 6) einen Schlitten umfasst, der verfahrbar an dem Tragelement (14) angeordnet ist.

8. Montageanordnung nach einem der Ansprüche 2 bis 6,
bei der der das Tragelement (14) als Säulenlift (7) mit einer verfahrbaren Plattform (15) ausgestaltet ist und der Greifausleger (5, 6) einen Grundkörper (25) umfasst, mit dem er an der Plattform (15) befestigt ist.

9. Montageanordnung nach einem der Ansprüche 1 bis 8,
bei der Befestigungselement (35) einen Flansch aufweist.

10. Montageanordnung nach einem der Ansprüche 1 bis 9,
bei der Befestigungselement (43) Klemmbacken (49, 51, 53) aufweist.

11. Montageanordnung nach einem der Ansprüche 1 bis 10,
bei der die Halterung (33, 41) einen Befestigungsmechanismus zum lösbaren Befestigen des Befestigungselementes (35, 43) an der Halterung (33, 41) aufweist.

12. Montageanordnung nach einem der Ansprüche 1 bis 11,
die wenigstens zwei Montagevorrichtungen (1) umfasst.

13. Montageanordnung nach einem der Ansprüche 1 bis 12,
in dem wenigstens ein Greifausleger ein hydraulischer Greifausleger (5) ist.

14. Montageanordnung nach einem der Ansprüche 1 bis 12,
in dem wenigstens ein Greifausleger ein pneumatischer Greifausleger (6) ist.
